# EUROPÄISCHE PATENTANMELDUNG

(11) **EP 0 608 758 A1**
(43) Veröffentlichungstag der Anmeldung: **03.08.1994**
(21) Anmeldenummer: 94100697.5
(22) Anmeldetag: 19.01.1994
(51) Int. Cl.: G01D 5/38, G01B 11/00

(54) **Mehrkoordinaten-Messeinrichtung**

(30) Priorität: 28.01.1993 DE 4302313
(71) Anmelder: Dr. Johannes Heidenhain GmbH, D-83292 Traunreut (DE)
(72) Erfinder: Huber, Walter, Dipl.-Ing. (FH), D-83278 Traunstein (DE); Allgäuer, Michael, Dipl.-Phys., D-83371 Stein/Traun (DE)

(57) **Zusammenfassung**

In Figur 1 ist eine Mehrkoordinaten-Meßeinrichtung (1) dargestellt, deren Abtasteinheit auf einem Substrat (3) eine integriert optische Schaltung aufweist. Aus einer als Kreuzgitter (2) ausgebildeten Maßverkörperung werden Teilstrahlenbündel (4a, 4b, 4c, 4d) durch Beugung erzeugt. Über Einkoppelgitter (5, 6, 11, 12) und Lichtwellenleiter (7, 8, 13, 14) werden die Teilstrahlenbündel (4a, 4b, 4c, 4d) Kopplern (9, 15) zugeführt, wo sie zur Interferenz gebracht und anschließend von Detektoren (10, 16) in elektrische Meßsignale umgewandelt werden.

## Beschreibung

Die Erfindung bezieht sich auf eine Mehrkoordinaten-Meßeinrichtung nach dem Oberbegriff des Anspruches 1.

In der Dissertation "Photoelektrische Messung der Änderung von Längen und Winkelpositionen mit Hilfe von Beugungsgittern" von Fromund Hock, Stuttgart 1978 ist im Abschnitt 11.6 eine interferentielle Meßeinrichtung für zwei Meßrichtungen beschrieben. Ein von einer Lichtquelle ausgehendes kollimiertes Lichtstrahlenbündel durchsetzt ein Kreuzgitter eines Maßstabes, das diagonal zu den beiden Meßrichtungen verläuft, sowie vier Ortsfrequenzfilterblenden und wird mittels zweier Objektive auf ein erstes Lineargitter abgebildet, das zur ersten Meßrichtung ausgerichtet ist und die Beugungsstrahlen vereinigt, die am Maßstab in diese erste Meßrichtung abgelenkt worden sind. Die vereinigten Beugungsstrahlen der ersten Meßrichtung werden mittels eines dritten Objektives auf erste Detektoren geleitet, die Abtastsignale zur Erzeugung von Meßwerten für die erste Meßrichtung liefern. Die Beugungsstrahlen, die am Maßstab in die zweite Meßrichtung abgelenkt worden sind, werden mittels eines vierten Objektives auf ein zweites Lineargitter abgebildet, das zur zweiten Meßrichtung ausgerichtet ist, und gelangen sodann auf zweite Detektoren, die Abtastsignale zur Erzeugung von Meßwerten für die zweite Meßrichtung liefern. Diese Meßeinrichtung besitzt den Nachteil eines sehr aufwendigen Aufbaues.

Der Erfindung liegt die Aufgabe zugrunde, eine interferentielle Mehrkoordinaten-Meßeinrichtung anzugeben, die bei wesentlich einfacherem Aufbau eine hohe Meßgenauigkeit erlaubt.

Diese Aufgabe wird erfindungsgemäß durch die Merkmale des Anspruches 1 gelöst.

Die mit der Erfindung erzielten Vorteile bestehen insbesondere darin, daß durch die Verwendung eines Kreuzgitters in Verbindung mit den Vorteilen der integrierten Optik (Oberwellenfreiheit, definierte Phasenbeziehungen zwischen den Signalen am Kopplerausgang) ein einfacher Aufbau möglich ist.

Vorteilhafte Ausbildungen der Erfindung entnimmt man den Unteransprüchen.

Ausführungsbeispiele der Erfindung werden anhand der Zeichnungen näher erläutert.

Es zeigen
- Figur 1: eine interferentielle Meßeinrichtung für zwei Meßrichtungen in einer schematischen Ansicht;
- Figur 2: ein Substrat mit Einkoppelgittern und zwei Gruppen von Kopplern in einer Draufsicht und
- Figur 3: ein Substrat mit zwei gekreuzten Einkoppelgittern in Draufsicht.

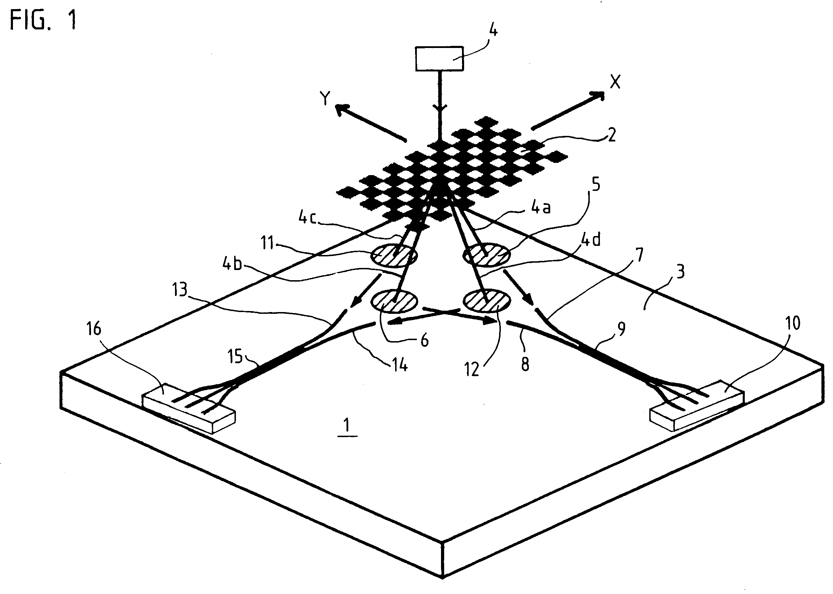

Eine in Figur 1 dargestellte Mehrkoordinaten-Meßeinrichtung 1 arbeitet im Durchlichtverfahren und mißt in den orthogonalen Richtungen X und Y die Bewegungen einer als Kreuzgitter 2 ausgebildeten Maßverkörperung relativ zu einem Substrat 3. Dieses Kreuzgitter 2 ist vorzugsweise als Phasenstruktur ausgebildet. Von einer Lichtquelle 4 kommendes Licht wird am Kreuzgitter 2 gebeugt und es entsteht eine Vielzahl von Teilstrahlenbündeln, von denen die Teilstrahlenbündel 4a, 4b, 4c und 4d zur Messung in zwei Koordinatenrichtungen X und Y herangezogen werden.

Analog dazu ist eine Mehrkoordinaten-Meßeinrichtung nach dem Auflichtverfahren möglich, bei der die Lichtquelle in das Substrat integriert ist.

Das Teilstrahlenbündel 4a entsteht durch Beugung am Kreuzgitter 2 in positiver X-Richtung in die +1.Ordnung. Das Teilstrahlenbündel 4b entsteht dabei durch Beugung am Kreuzgitter 2 in negativer X-Richtung in die -1.Ordnung. Diese Teilstrahlenbündel 4a und 4b fallen auf Einkoppelgitter 5 und 6, mittels der sie in Streifenwellenleiter 7 und 8 eingespeist werden. Die beiden Streifenwellenleiter 7 und 8 münden in einen sogenannten Koppler 9, in welchem die eingespeisten Teilstrahlenbündel 4a und 4b zur Interferenz gebracht und anschließend einem zugeordneten Detektor 10 zugeführt werden. Der Detektor 10 wandelt die optischen Signale in elektrische Signale um, die die Meßgröße für die Positionsmessung darstellen.

In äquivalenter Weise erfolgt die Ermittlung der Meßgröße in der Y-Koordinate über die Teilstrahlenbündel 4c und 4d, die Einkoppelgitter 11 und 12, die Streifenwellenleiter 13 und 14, den Koppler 15 und den zugehörigen Detektor 16.

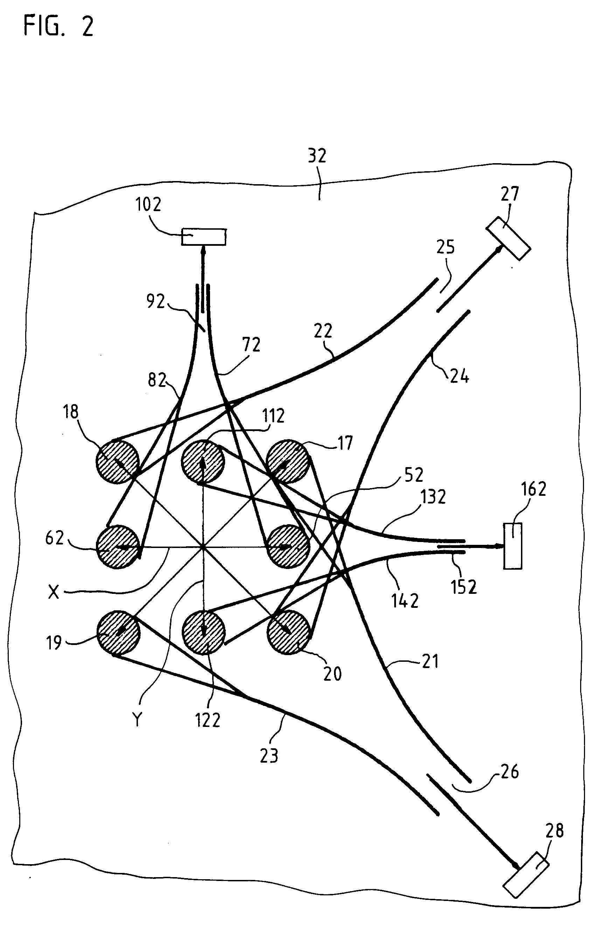

In Figur 2 ist eine besonders vorteilhafte Variante der erfindungsgemäßen Meßeinrichtung in ihrem wichtigsten Detail dargestellt. Gleichartige Funktionselemente tragen das dem Figur 1 entsprechende Bezugszeichen, jedoch mit einem um die Figuren-Bezifferung ergänzten Index. Zusätzliche Elemente sind fortlaufend beziffert.

Zusätzlich zu den Einkoppelgittern 52, 62, 112, 122, die den Einkoppelgittern gemäß Figur 1 entsprechen und den zugehörigen Streifenwellenleitern 72, 82, 132, 142, sind weitere Einkoppelgitter 17, 18, 19, 20 vorgesehen, denen ebenfalls Streifenwellenleiter 21, 22, 23 und 24 zugeordnet sind. Diese Einkoppelgitter 17, 18, 19 und 20 nutzen weitere gebeugte Teilstrahlenbündel aus, so daß eine vollständige zweite Kreuzgitter-Mehrkoordinaten-Meßeinrichtung gebildet wird, die gegenüber der ersten Mehrkoordinaten-Meßeinrichtung 1 um 45° im Koordinatensystem verdreht ist. Selbstverständlich münden dazu die Streifenwellenleiter 21, 22, 23, 24 in weitere Koppler 25, 26, die die interferierenden Teilstrahlenbündel weiteren Detektoren 27 und 28 zuführen.

Auf diese Weise wird eine redundante Mehrkoordinaten-Meßeinrichtung geschaffen, bei der das um 45° gedrehte System die Meßfunktion vollständig übernehmen kann, wenn das ursprüngliche System ausfällt.

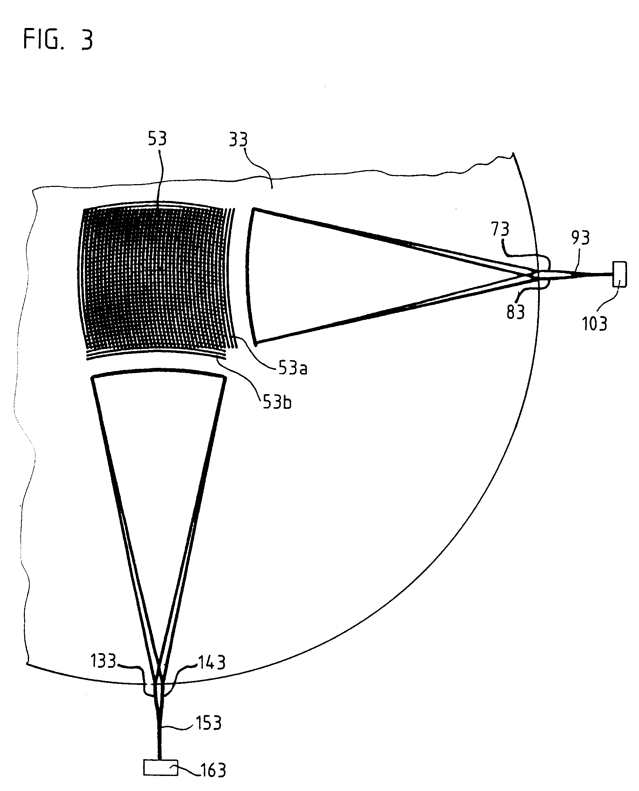

In Figur 3 ist eine Einzelheit einer weiteren besonders vorteilhaften Mehrkoordinaten-Meßeinrichtung dargestellt. Ein nicht näher bezeichnetes Substrat ist als planarer Wellenleiter 33 ausgebildet. Anstelle der Vielzahl der bisher beschriebenen einzelnen Einkoppelgitter ist ein einziges Einkoppelgitter 53 vorgesehen, welches aus zwei miteinander gekreuzten Gittern besteht. Wenn das Einkoppelgitter 53 aus zwei miteinander gekreuzten Zirkulargittern 53a und 53b gebildet wird, ergibt sich eine besonders vorteilhafte Konstellation.

In einer, den bereits beschriebenen Lösungen ähnlichen Weise werden vier der erzeugten, hier nicht dargestellten Teilstrahlenbündel durch dieses spezielle Einkoppelgitter 53 in den planaren Wellenleiter 33 eingekoppelt und vier Streifenwellenleitern 73, 83, 133, 143 zugeführt. In Kopplern 93 und 153 werden die Teilstrahlenbündel zur Interferenz gebracht und von Detektoren 103 und 163 in elektrische Meßsignale umgewandelt.

Als bevorzugte Lichtquellen eignen sich Laser-Lichtquellen.

## Patentansprüche

1. Beugungsoptisch arbeitende Mehrkoordinaten-Meßeinrichtung mit wenigstens einem Kreuzgitter als Maßverkörperung, welches aus dem von einer Lichtquelle kommenden Licht mehrere in unterschiedliche Koordinatenrichtungen gebeugte Teilstrahlenbündel erzeugt, und mit einer Abtasteinheit die mehrere, den gebeugten Teilstrahlenbündeln zugeordnete Detektoren aufweist, dadurch gekennzeichnet, daß die Abtasteinheit eine integriert-optische Schaltung enthält, auf deren Substrat (3, 32, 33) wenigstens ein Einkoppelelement (5, 6, 11, 12; 52, 62, 112, 122; 53) angeordnet ist, mit dem die gebeugten Teilstrahlenbündel (4a, 4b, 4c, 4d) in Lichtwellenleiter (7, 8, 13, 14; 72, 82, 132, 142; 21, 22, 23, 24; 73, 83, 133, 143) eingespeist und über mehrere räumlich getrennte Koppler (9, 15; 92, 152, 25, 26; 93, 153) die die Teilstrahlenbündel paarweise zur Interferenz bringen, den Detektoren (10, 16; 27, 28, 102, 162; 103, 163) zugeleitet werden.

2. Mehrkoordinaten-Meßeinrichtung nach Anspruch 1, dadurch gekennzeichnet, daß das Einkoppelelement von einem Einkoppelgitter (53) gebildet wird, das aus zwei miteinander gekreuzten Gittern (53a, 53b) besteht.

3. Mehrkoordinaten-Meßeinrichtung nach Anspruch 2, dadurch gekennzeichnet, daß die gekreuzten Gitter (53a, 53b) Zirkular-Gitter sind.

4. Mehrkoordinaten-Meßeinrichtung nach Anspruch 1, dadurch gekennzeichnet, daß mehrere Einkoppelelemente in Form von Einzel-Einkoppelgittern (5, 6, 11, 12; 52, 62, 112, 122; 17, 18, 19, 20) für jedes gebeugte Teilstrahlenbündel (4a, 4b, 4c, 4d) vorgesehen sind.

5. Mehrkoordinaten-Meßeinrichtung nach Anspruch 1, dadurch gekennzeichnet, daß die Lichtwellenleiter als Streifenwellenleiter (7, 8, 13, 14; 72, 82, 132, 142; 73, 83, 133, 143) ausgebildet sind.

6. Mehrkoordinaten-Meßeinrichtung nach Anspruch 1, dadurch gekennzeichnet, daß die Koppler (9, 15; 92, 152, 25, 26; 93, 153) als sogenannte 2x3-Koppler ausgebildet sind.

7. Mehrkoordinaten-Meßeinrichtung nach Anspruch 1, dadurch gekennzeichnet, daß zur Messung in zwei orthogonalen Richtungen je zwei Teilstrahlenbündel (4a, 4b, 4c, 4d) ausgewertet werden.

8. Mehrkoordinaten-Meßeinrichtung nach Anspruch 1, dadurch gekennzeichnet, daß zum Aufbau eines redundanten Meßsystemes acht Teilstrahlenbündel ausgewertet werden.

9. Mehrkoordinaten-Meßeinrichtung nach Anspruch 8, dadurch gekennzeichnet, daß das redundante Meßsystem aus zwei Meßsystemen mit je zwei orthogonalen Meßrichtungen gebildet wird, wobei die Meßrichtungen der zwei Meßsysteme einen Winkel von 45° zueinander einschließen.

10. Mehrkoordinaten-Meßeinrichtung nach Anspruch 1, dadurch gekennzeichnet, daß die Lichtquelle (4) als Laser-Lichtquelle ausgebildet ist.

11. Mehrkoordinaten-Meßeinrichtung nach Anspruch 1, dadurch gekennzeichnet, daß sie als Durchlicht- oder als Auflicht-Meßeinrichtung ausgebildet ist.

12. Mehrkoordinaten-Meßeinrichtung nach Anspruch 1, dadurch gekennzeichnet, daß das Kreuzgitter (2) als Phasenstruktur ausgebildet ist.
